# EUROPÄISCHE PATENTSCHRIFT

(11) **EP 3 403 000 B1**
(45) Veröffentlichungstag und Bekanntmachung des Hinweises auf die Patenterteilung: **20.07.2022**
(21) Anmeldenummer: 17703018.6
(22) Anmeldetag: 05.01.2017
(51) Int. Cl.: F16F 9/04

(54) **LUFTFEDER FÜR ACHSEN LUFTGEFEDERTER FAHRZEUGE**
PNEUMATIC SPRING FOR AXLES OF VEHICLES WITH AIR SUSPENSION
RESSORT PNEUMATIQUE POUR ESSIEUX DE VÉHICULES À SUSPENSION PNEUMATIQUE

(30) Priorität: 14.01.2016 DE 102016100581
(43) Veröffentlichungstag der Anmeldung: 21.11.2018
(73) Patentinhaber: BPW Bergische Achsen KG, 51674 Wiehl (DE)
(72) Erfinder: HASENBURG, Lisa, 51647 Gummersbach (DE); BERGHAUS, Roland, 51789 Lindlar (DE); WALTER, Bernhard, 58553 Halver (DE); FLEISCHHAUER, Martin, 64289 Darmstadt (DE)
(74) Vertreter: Janke Scholl Patentanwälte PartG mbB
(86) Internationale Anmeldenummer: PCT/DE2017/100005
(87) Internationale Veröffentlichungsnummer: WO 2017/121425

(56) Entgegenhaltungen:
- WO-A1-01/42678
- DE-A1-102012 104 964
- DE-C2- 4 115 028

## Beschreibung

Die Erfindung betrifft eine Luftfeder für Achsen luftgefederter Fahrzeuge mit einem achsseitig festlegbaren Tauchkolben, einem fahrzeugseitig festlegbaren oberen Abschlussdeckel mit einem daran befestigten Rollbalg, und mit einem an dem Rollbalg ausgebildeten Wulst, der an der Oberseite des Tauchkolbens durch einen Ring fixiert ist.

Luftfedern bestehen im Allgemeinen aus einem mit Druckluft gefüllten, elastischen Rollbalg, der in der Regel an einem oberen, fahrzeugseitig angeordneten Abschlussdeckel sowie unten an einem Tauchkolben festgelegt ist. Der Tauchkolben dringt beim Einfedern der Luftfeder in das Volumen des Rollbalgs ein. Der Tauchkolben ist achsseitig entweder direkt an der Fahrzeugachse oder auf dem die Fahrzeugachse führenden Längslenker festgelegt. Des Weiteren können zwischen dem Rollbalg und dem Tauchkolben sogenannte Pufferelemente zur Dämpfung von Durchschlägen angeordnet sein.

Die Befüllung des Rollbalgs mit Luft wird über ein an dem oberen Abschlussdeckel befindliches Druckventil vollzogen. Der Rollbalg besitzt jeweils an seinem oberen und unteren Ende Rollbalgwulste, die jeweils einen einvulkanisierten Drahtkern besitzen können. Diese sind am oberen Abschlussdeckel der Luftfeder und am Tauchkolben befestigt.

Im Stand der Technik sind verschiedene Möglichkeiten zur Fixierung der Rollbalgwulste des Rollbalgs am Abschlussdeckel und dem Tauchkolben bekannt. Die Befestigung der Rollbalgwulste am Abschlussdeckel wird in der Regel durch einen Einschluss der Rollbalgwulste in Umbördelungen des Abschlussdeckels sichergestellt.

Für die Fixierung des Rollbalgs am Abrollkolben ist in der DE 10 2012 104 964 A1 eine Rastlösung offenbart. Der Abrollkolben besitzt im Bereich seiner Deckplatte eine sich nach innen verjüngende Kavität für einen Konusdichtsitz mit einer wulstartigen Ausstülpung des Rollbalgs. Die axiale Fixierung des trapezförmigen Rollbalgwulstes ist mittels einer entlang des Innenschenkels der Kavität des Tauchkolbens im Bereich seiner Deckplatte umfänglich verlaufenden Nut und einem in der Nut formschlüssig eingelassenen Spannring gewährleistet. Die Befestigung des Rollbalgwulstes durch Einspannen eines Spannrings in der Nut ist unter dauerhafter Belastung, wie beispielsweise einer vertikalen Schwingbewegung, anfällig für Materialabnutzungen durch zwischen dem Spannring und dem Rollbalgwulst auftretende Reibkräfte. Dies kann ein Schwinden der Materialien und ein damit verbundenes Ausbrechen des Rollbalgwulstes aus der Kavität des Konusdichtsitzes zur Folge haben.

Eine über Gewindeanordnungen erzielte Befestigung des Rollbalgs am Tauchkolben ist in der DE 41 15 028 C2 gezeigt. Dort ist eine aus einem Rollbalg und einem Tauchkolben bestehende Luftfeder dargestellt, wobei der Rollbalg an seinen offenen Enden konische Dichtwülste aufweist, die mit auf einem konischen Dichtsitz des Tauchkolbens befindlichen Gewindegangabschnitten verbunden sind. Die Montage einer solchen Anordnung verlangt eine aufwändige und daher manuell durchzuführende Verdrehung des Rollbalgs gegen die auf dem Konus befestigten Gewindegangabschnitte. Weiterhin kann eine solche Drehverbindung der Gewindegangabschnitte und des Rollbalgs unter Dauerbeanspruchung zu Schädigungen am Rollbalg führen.

Der Erfindung liegt die **Aufgabe** zu Grunde, eine einfache, unlösbare und zugleich druckdichte Montage des Rollbalgs am Tauchkolben zu schaffen, welche auch für eine vollautomatische Befestigung des Rollbalgs an dem Tauchkolben geeignet ist.

Zur **Lösung** dieser Aufgabe wird eine Luftfeder für Achsen luftgefederter Fahrzeuge mit den in Patentanspruch 1 angegebenen Merkmalen vorgeschlagen.

Eine solche Luftfeder besteht hauptsächlich aus einem an einem fahrzeugseitig befestigten Abschlussdeckel montierten Rollbalg, dessen Hauptkörper mit Luft befüllt und der an seinem oberen und unteren Ende mit Wulsten bestückt ist, sowie einem Tauchkolben, dessen unteres Ende achsseitig festgelegt ist. Dabei ist das obere Ende des Rollbalgs an dem Abschlussdeckel befestigt, während der Wulst am unteren Ende des Rollbalgs mit der Oberseite des Tauchkolbens durch einen Ring gesichert ist. Eine derartige Sicherung ist über einen an dem Ring und an dem Tauchkolben ausgebildeten Drehmechanismus verwirklicht.

Die hier aufgeführte, über einen Ring gesicherte Befestigung des Rollbalgs und des Tauchkolbens zeichnet sich durch einen einfachen Drehmechanismus aus, der gleichzeitig mehrere Komponenten der Luftfeder in einem Arbeitsschritt miteinander verbindet, zum Beispiel durch gegenseitiges Klemmen oder miteinander Verspannen.

Der Drehmechanismus, der die Verbindung zwischen Rollbalg und Tauchkolben über einen Ring vermittelt, ist durch ein zwischen dem Ring und dem Tauchkolben verlaufendes

Gewinde gekennzeichnet. Dabei besteht das Gewinde aus einem Innengewinde, verlaufend entlang der zylindrischen Innenfläche des Rings, und einem Außengewinde, das sich an der Mantelfläche eines runden Vorsprunges des Tauchkolbens befindet. Ein solches direkt am Tauchkolben angeformtes Gewinde ermöglicht es, abgesehen vom Ring, auf zusätzliche Verbindungselemente zur Verbindung des Tauchkolbens und des Rollbalgs zu verzichten. Dies führt einerseits zu einer Materialersparnis und andererseits zu einer vereinfachten Kopplung beider Komponenten. Der Tauchkolben mit seinem an seiner Oberseite gelegenen Vorsprung samt Außengewinde kann beispielsweise in einem Spritzgussverfahren in einem Schritt gefertigt werden.

Ein zusätzliches Merkmal des den Rollbalg an dem Tauchkolben sichernden Rings ist die unlösbare Verzahnung des Rings mit dem Tauchkolben. Eine solche Verzahnung kann beispielsweise durch auf der dem Tauchkolben zugewandten Seite des Rings befindliche Rastelemente und Rastelementen, die auf der dem Abschlussdeckel zugewandten Seite des Tauchkolbens angeordnet sind, verwirklicht werden. In einer Ausgestaltungsform sind die Rastelemente von der jeweiligen Oberfläche ausgehend nach oben oder unten mit einer Anschrägung versehen. Ein solcher Verzahnungsmechanismus mit angeschrägten Rastelementen hat den Vorteil, dass er nur eine unidirektionale Drehbewegung erlaubt und somit eine unlösbare Drehbefestigung gewährleistet. Dies führt in der erfindungsgemäßen Ausgestaltung zu einem dauerhaften Verschluss von Rollbalg und Tauchkolben mit dem entscheidenden Vorteil, auf zusätzliche Verbindungselemente wie die im Stand der Technik angeführten Spannringe oder Gewindegangabschnitte verzichten zu können.

Ein weiterer Vorteil des erfindungsgemäßen Verschlussmechanismus ist dadurch gegeben, dass der Ring neben dem Rollbalg und dem Tauchdeckel auch ein zwischen dem Tauchkolben und dem oberen Abschlussdeckel angeordnetes Pufferelement umschließt. Dies wird über eine zur Mantelfläche der Luftfeder gerichtete radiale Erweiterung an der dem Tauchkolben zugewandten Seite des Pufferelements, sowie einer zur Innenseite der Luftfeder gerichtete, dem oberen Abschlussdeckel zugewandte, radiale Erweiterung des Rings, durch Übergreifen beider radialer Erweiterungen vollzogen. Dadurch kann auf weitere oder eigenständige Verschlusskomponenten zur Befestigung des Pufferelementes am Rollbalg bzw. am Tauchkolben verzichtet werden.

Das Pufferelement besteht vorzugsweise aus einem gummiartigen, thermoplastischen Kunststoff. Das aus Gummi gefertigte Basismaterial des Rollbalgs und des Tauchkolbens ermöglichen gegebenenfalls eine vollautomatische Fertigung der Luftfederhauptkomponenten.

Die Anordnung des Rings innerhalb der Luftfeder ermöglicht es, den unteren Wulst des Rollbalgs mit der Ringunterseite radial zu übergreifen, und den Rollbalg dadurch zu fixieren. Auch in diesem Fall sind keine weiteren Materialkomponenten zur Befestigung des Rollbalgwulstes nötig. Rollbalgwulste bestehen häufig aus einem in den Rollbalgkunststoff einvulkanisierten Drahtring, welcher eine zusätzliche Stabilität gegenüber Klemmkräften bietet.

Die durch den Ring vermittelte Verspannung der Luftfederhauptkomponenten, insbesondere dem Rollbalg, dem Tauchkolben und dem Pufferelement, stellt eine einfache, unlösbare, materialsparende und stabile Möglichkeit einer Drehbefestigung und zugleich einer Einklemmung der Luftfederhauptkomponenten dar. Die unlösbare Drehbefestigung wirkt horizontal angreifenden Scherkräften entgegen, während das Einklemmmen des unteren Rollbalgwulstes unter dem Ring im Wesentlichen vertikal wirkenden Kräften entgegensteht. Zudem ist es damit ermöglicht, die Luftfederhauptkomponenten vollautomatisch, beispielsweise im Spritzgussverfahren zu fertigen, und miteinander in nur einem Schritt zu verspannen, wodurch aufwendige Arbeitsschritte und Materialkosten eingespart werden können.

Weitere Einzelheiten und Vorteile der Erfindung ergeben sich aus der nachfolgenden Beschreibung der zugehörigen Zeichnungen, in denen ein Ausführungsbeispiel einer erfindungsgemäßen Luftfeder dargestellt ist. In den Zeichnungen zeigen:
- Fig. 1: eine perspektivische Ansicht einer Ausführungsform einer Luftfeder auf einer luftgefederten Achse;
- Fig. 2: einen Schnitt entlang der Längsachse einer Luftfeder, mit einem fahrzeugseitig befestigtem Abschlussdeckel, einem daran befestigten Rollbalg, einem achsseitig befestigtem Tauchkolben, einem Pufferelement und einem den Rollbalg, den Tauchkolben und das Pufferelement verspannenden Ring;
- Fig. 3: eine Explosionsansicht der Luftfeder mit den in Fig. 1 gezeigten Einzelkomponenten;
- Fig. 4: einen schematischen Schnitt des Tauchkolbens;
- Fig. 5: eine Detailansicht eines Ausschnittes eines auf dem Tauchkolben angeordneten Rings von Rastelementen;
- Fig. 6: eine perspektivische Ansicht von der Unterseite des den Rollbalg und den Tauchkolben verspannenden Rings;
- Fig. 7: eine Detailansicht eines Ausschnittes eines auf der unteren Innenseite des Rings angeordneten Rastelementes.

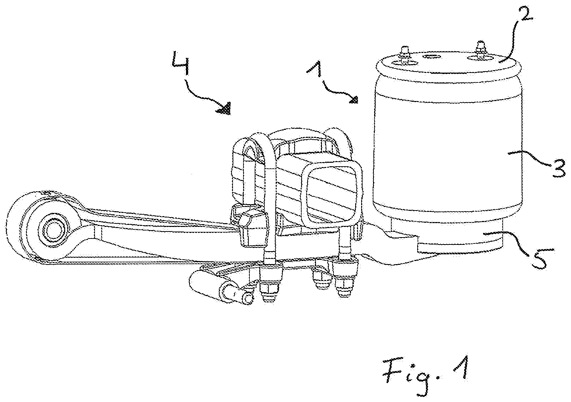

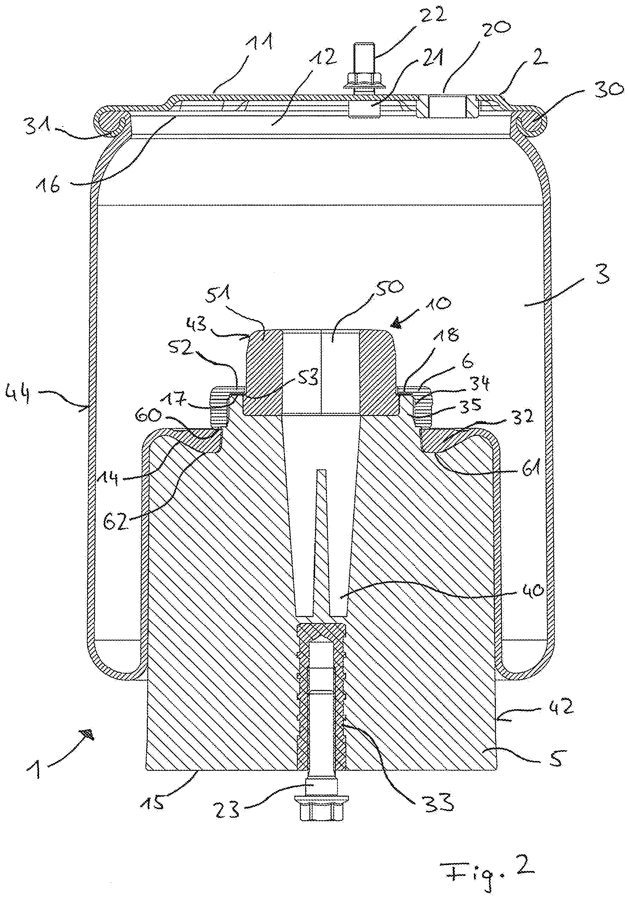

Die Luftfeder 1 ist gemäß Fig. 1 mit ihrer Unterseite an einer Fahrzeugachse 4 festgelegt. In der Fig. 2 ist ein Schnitt einer Luftfeder 1 gezeigt, welche aus einem fahrzeugseitig, z. B. am Fahrzeugchassis, befestigten Abschlussdeckel 2, einem daran befestigten Rollbalg 3, einem an der Fahrzeugachse 4 oder dem Längslenker der Fahrzeugachse befestigten Tauchkolben 5, einem den Rollbalg 3 mit dem Tauchkolben 5 sichernden Ring 6, sowie einem zwischen dem Abschlussdeckel 2 und dem Tauchkolben 5 angeordneten Pufferelement 10 besteht. Das Pufferelement 10 ist oberhalb des Tauchkolbens 5 angeordnet.

Der fahrzeugseitig befestigte Abschlussdeckel 2 ist von seiner dem Fahrzeug zugewandten Oberseite 11 mit einem Druckluftanschluss 20 sowie einer zur Fahrzeugseite hin weisenden Verschraubung 21 versehen und mit Halteschrauben 22 chassisfest montiert. Der Abschlussdeckel 2 besitzt an seiner Außenseite radial verlaufende Einschlusstaschen 30, die in Richtung des Luftfederinnenraums abschließen. In die Einschlusstaschen 30 ist das obere dem Abschlussdeckel 2 zugewandte Ende des Rollbalgs 3 eingelassen.

Die ringförmigen Rollbalgenden des Rollbalgs sind sowohl an der Oberseite 12 und Unterseite 14 des Rollbalgs 3 in Form von oberen ringförmigen Wulsten 31 und unteren ringförmigen Wulsten 32 ausgebildet. Die an der Oberseite 12 des Rollbalgs befindlichen Wulste 31 sind in die Einschlusstaschen 30 des Abschlussdeckels 2 eingelassen, z. B. durch Umbördeln.

Der Rollbalg 3 umschließt zumindest teilweise die Mantelfläche des achsseitig befestigten Tauchkolbens 5, auf der er beim Einfedern abrollt. Folge ist ein "Eintauchen" des Tauchkolbens 5 in das Volumen des Rollbalgs 3 beim Einfedervorgang. Die der Fahrzeugachse 4 zugewandte Seite des Tauchkolbens 5 ist über ein Gewinde 33 und eine entsprechende Gewindeschraube 23 mit der Fahrzeugachse 4 oder einem Achslenker des Fahrzeugs verbunden. Der Tauchkolben 5 besitzt auf seiner dem Abschlussdeckel 2 der Luftfeder 1 zugewandten Oberseite 13 einen axial zur Längsachse A verlaufenden Vorsprung 35.

Der Innenraum des Tauchkolbens 5 ist durch Hohlräume 40 sowie teils Vollmaterial gebildet. Stegartige Verbindungselemente 41 verlaufen vom Tauchkolbenmantel 42 radial bezogen auf dessen Längsachse A und ragen entlang der Längsachse A in das Innere des Tauchkolbens 5 hinein, wodurch die Hohlräume 40 voneinander abgegrenzt werden, die segmentartig gestaltet sind.

Die Innenseiten des axialen Vorsprungs 35 des Tauchkolbens 5 auf der dem Abschlussdeckel 2 zugewandten Oberseite 13 des Tauchkolbens 5 umschließen eine Teillänge einer Mantelfläche 43 eines zwischen dem Tauchkolben 5 und dem Abschlussdeckel 2 angeordneten Pufferelementes 10. Der Radius des Pufferelementes 10 ist in der hier gezeigten Ausführungsform kleiner als der Radius des Vorsprungs 35 auf der Oberseite 13 des Tauchkolbens 5. Der Innenbereich des Pufferelements 10 setzt sich aus Pufferelementhohlräumen 50 und Vollmaterialkomponenten zusammen, die durch radial bezogen auf die Längsachse A der Luftfeder 1 verlaufende Stege 51 getrennt sind.

Der Vorsprung 35 auf der Oberseite 13 des Tauchkolbens 5 ist von außen durch den Ring 6 umschlossen. Zudem ist auch eine Teillänge des Pufferelementes 10 vom Ring 6 umschlossen. Der in das Innere der Luftfeder 1 hineinragende, radial zur Längsachse A verlaufende Bund 52 liegt zumindest teilweise auf einem radial zur Längsachse A verlaufenden, zur Mantelfläche 44 der Luftfeder 1 gerichteten Bund 53 des Pufferelementes 10 auf. An dieser Stelle besitzt der ins Innere der Luftfeder 1 ragende Bund 52 des Rings 6 einen Innenradius, welcher kleiner ist als der Außenradius des Bunds 53 am Pufferelement 10, beides bezogen auf die Längsachse A der Luftfeder 1. Weiterhin übergreift der Ring 6 an seiner Unterseite 60 radial den ringförmigen unteren Wulst 32 des Rollbalgs 3 und schließt diesen in einer Tasche 61 ein.

In der Fig. 2 wird ebenfalls deutlich, dass die der Fahrzeugachse zugewandte Ringunterseite 60 des Rings 6 zumindest teilweise den unteren ringförmigen Wulst 32 des Rollbalgs 3 radial übergreift. Die Oberseite 13 des Tauchkolbens 5 weist eine um die Längsachse A der Luftfeder 1 verlaufende Absenkung 62 in Gestalt einer ringförmigen Rinne auf, in welcher der untere ringförmige Wulst 32 des Rollbalgs 3 formschlüssig sitzt. Durch das partielle Übergreifen der Ringunterseite 60 des Rings 6 über den unteren Wulst 32 des Rollbalgs 3 wird der Rollbalg 3 an seiner Unterseite 14 fixiert.

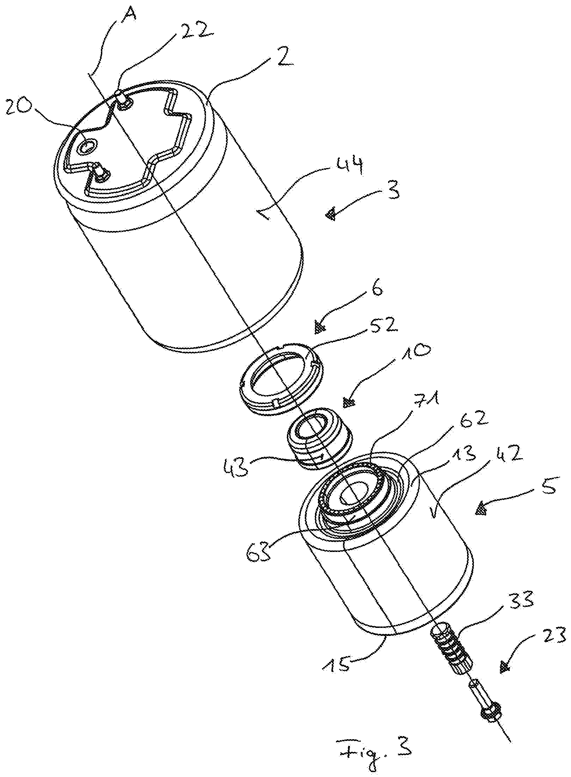

Wie auch in Fig. 3 gezeigt, ist die Außenseite 63 des in Richtung des Abschlussdeckels 2 weisenden Vorsprungs 35 des Tauchkolbens 5 mit einem Außengewinde 64 versehen. Das entsprechende Gegengewinde 65 ist an der Innenseite des den Vorsprung 35 und das Pufferelement 10 umschließenden Rings 6 ausgebildet. Der Ring 6 umfasst mit seinem Innengewinde 65 das Außengewinde 64 des Vorsprungs 35 des Tauchkolbens 5 und schließt zudem das Pufferelement 10 zumindest teilweise ein.

Weiterhin weist die Oberseite 13 des Tauchkolbens 5 im Bereich einer zum Abschlussdeckel 2 weisenden radial verlaufenden Stirnfläche 18 des Vorsprungs 35 eine ringförmige Anordnung von Rastelementen 71 auf.

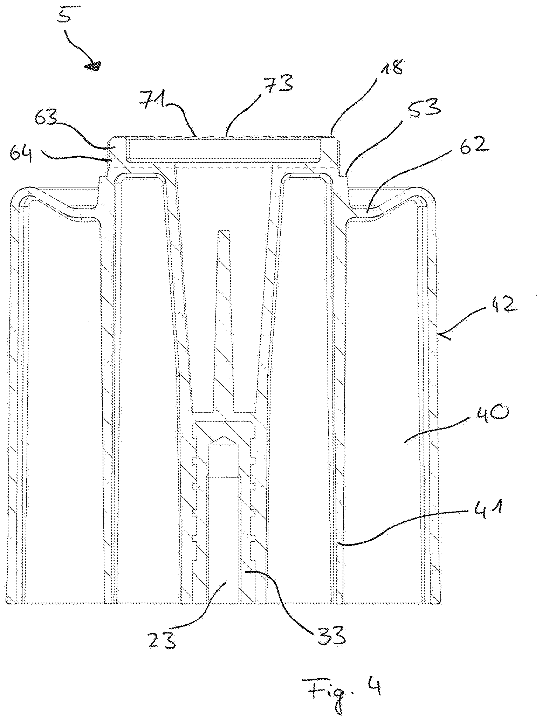

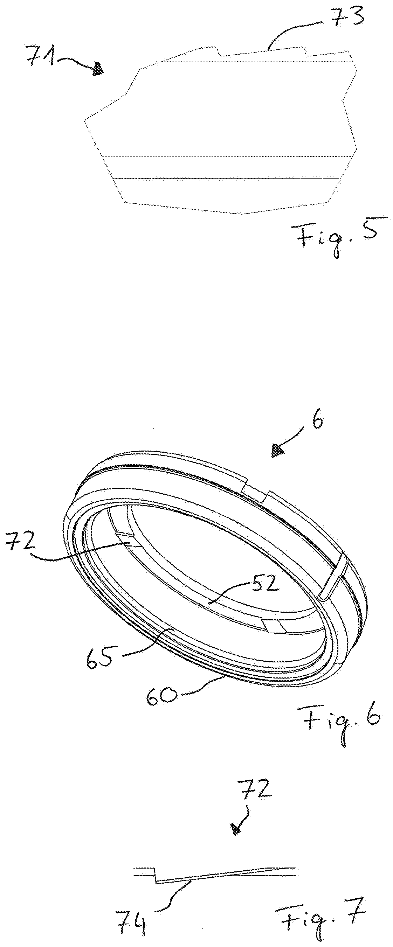

Die ringförmige Anordnung von unteren Rastelementen 71 auf der Stirnfläche 18 des Vorsprungs 35 ist auch in Fig. 4 und Fig. 5 dargestellt. Dabei handelt es sich um eine ringförmige Aneinanderreihung von unteren Rastelementen 71 mit einer zur Fahrzeugseite verlaufenden Anschrägung 72 der einzelnen Rastelemente 71. Wie insbesondere in der Fig. 5 deutlich wird, definieren die Hochpunkte 75 der einzelnen Rastelemente 71 und die Tiefpunkte 76 der Rastelemente 71 zwei Ebenen, welche die Lage der Rastelemente 71 bezogen auf die Längsachse A der Luftfeder festlegen. Hierbei ist es insbesondere von Bedeutung, dass alle Hochpunkte 75 die gleiche Lage bezüglich der Längsachse A der Luftfeder 1 einnehmen beziehungsweise alle Tiefpunkte 76 die gleiche Lage bezüglich der Längsachse A der Luftfeder 1 einnehmen. Eine solche ringförmige Anordnung von Rastelementen 71 ist bevorzugt aus einem einzelnen Bauteil preiswert zu fertigen.

Zur Verzahnung der Unterseite 17 des Bundes 52 des Rings 6 mit dem Vorsprung 35 des Tauchkolbens 5 ist der Bund 52 des Rings 6 von seiner Unterseite mit mindestens zwei symmetrisch angeordneten Rastelementen 72, vorzugsweise aber mit vier symmetrisch angeordneten Rastelementen 72 bestückt.

Wie in der Fig. 6 und 7 dargestellt, besitzen auch die oberen Rastelemente 72 eine Anschrägung 74, welche in Richtung der Fahrzeugachse verläuft. Bei Befestigung des Rings am Tauchkolben 5 greifen nicht nur das Innengewinde 65 des Rings 6 und das Außengewinde 64 des Vorsprungs 35 des Tauchkolbens 5 ineinander, sondern es greifen auch die an der Unterseite 17 des Bunds 52 des Rings 6 befindlichen Rastelemente 72 und die an der Stirnfläche 18 des Vorsprungs 35 des Tauchkolbens 5 angeordneten Rastelemente 71 ineinander. Dabei bilden die unteren Rastelemente 71 und die oberen Rastelemente 72 eine unlösbare, da einseitig sperrende Verbindung.

Eine solche Verbindung kann in einer weiteren Ausführungsform auch über einen Drehmechanismus nach Art eines Bajonettverschlusses zwischen dem Ring 6 und der Oberseite 13 des Tauchkolbens verwirklicht werden.

### Bezugszeichenliste

- 1: Luftfeder
- 2: Abschlussdeckel
- 3: Rollbalg
- 4: Fahrzeugachse
- 5: Tauchkolben
- 6: Ring
- 10: Pufferelement
- 11: Oberseite
- 12: Oberseite
- 13: Oberseite
- 14: Unterseite
- 15: Unterseite
- 16: Unterseite
- 17: Unterseite
- 18: Stirnfläche
- 20: Druckluftanschluss
- 21: Verschraubung
- 22: Halteschraube
- 23: Gewindeschraube
- 30: Einschlusstasche
- 31: oberer ringförmiger Wulst
- 32: unterer ringförmiger Wulst
- 33: Gewinde
- 34: Gewinde
- 35: Vorsprung
- 40: Hohlraum
- 41: Verbindungselement
- 42: Tauchkolbenmantel
- 43: Mantelfläche
- 44: Mantelfläche
- 50: Pufferelementhohlraum
- 51: Steg
- 52: Bund (Ring)
- 53: Bund (Pufferelement)
- 60: Ringunterseite
- 61: Tasche
- 62: Absenkung
- 63: Außenseite
- 64: Außengewinde
- 65: Innengewinde
- 71: Rastelement
- 72: Rastelement
- 73: Anschrägung
- 74: Anschrägung

- A: Längsachse

## Patentansprüche

1. Luftfeder für Achsen luftgefederter Fahrzeuge mit einem achsseitig festlegbaren Tauchkolben (5), einem fahrzeugseitig festlegbaren oberen Abschlussdeckel (2) mit einem daran befestigten Rollbalg (3), und mit einem an dem Rollbalg (3) ausgebildeten Wulst (32), der an der Oberseite (13) des Tauchkolbens (5) durch einen Ring (6) fixiert ist, **dadurch gekennzeichnet, dass** der Ring (6) über einen einerseits an dem Ring (6) und andererseits an dem Tauchkolben (5) ausgebildeten Drehmechanismus gegen den Tauchkolben (5) gesichert ist.

2. Luftfeder nach Anspruch 1, **dadurch gekennzeichnet, dass** der Drehmechanismus ein Gewinde (34) zwischen dem Ring (6) und dem Tauchkolben (5) ist.

3. Luftfeder nach Anspruch 2, **dadurch gekennzeichnet, dass** das Gewinde (34) aus einem Außengewinde (64) und einem Innengewinde (65) besteht, wobei das Außengewinde (64) am Tauchkolben (5) und das Innengewinde (65) am Ring (6) angeordnet ist.

4. Luftfeder nach Anspruch 3, **dadurch gekennzeichnet, dass** sich das Außengewinde (64) an einem an dem Tauchkolben (5) an seiner Oberseite (13) angeformten, runden Vorsprung (35) befindet.

5. Luftfeder nach Anspruch 1, **dadurch gekennzeichnet, dass** die dem Abschlussdeckel (2) abgewandte Seite des Rings (6) und die dem Abschlussdeckel (2) zugewandte Seite des Tauchkolbens (5) verzahnt sind, wobei es sich um eine einseitig sperrende Verzahnung handelt.

6. Luftfeder nach einem der Ansprüche 1 bis 5, **dadurch gekennzeichnet, dass** die dem Abschlussdeckel (2) abgewandte Seite des Rings (6) aus mehreren radialsymmetrisch angeordneten oberen Rastelementen (72) besteht und die dem Abschlussdeckel (2) zugewandte Seite des Tauchkolbens (5) aus mehreren aneinander anschließenden unteren Rastelementen (71) besteht, wobei die oberen Rastelemente (72) eine Anschrägung (74) in Richtung der Oberseite (13) des Tauchkolbens (5) besitzen und die unteren Rastelemente (71) eine Anschrägung (73) in Richtung der Unterseite (16) des Abschlussdeckels (2) besitzen.

7. Luftfeder nach Anspruch 6, **dadurch gekennzeichnet, dass** die oberen Rastelemente (72) an der Unterseite (17) eines zur Längsachse (A) der Luftfeder (1) vorstehenden Bundes (52) des Rings (6), und die unteren Rastelemente (71) an der Stirnfläche (18) eines runden Vorsprungs (35) des Tauchkolbens (5) ausgebildet sind.

8. Luftfeder nach einem der vorangehenden Ansprüche, **dadurch gekennzeichnet, dass** der Ring (6) ein an dem Tauchkolben (5) befindliches, dem Abschlussdeckel (2) zugewandtes Pufferelement (10) umschließt.

9. Luftfeder nach Anspruch 8, **dadurch gekennzeichnet, dass** das Pufferelement (10) aus einem Gummi oder einem thermoplastischen Kunststoff gefertigt ist.

10. Luftfeder nach Anspruch 8 und 9, **dadurch gekennzeichnet, dass** das Pufferelement (10) ein zur Mantelfläche (44) der Luftfeder (1) gerichteten radialen Bund (53) und der Ring (6) einen zur Längsachse (A) der Luftfeder (1) gerichteten radialen Bund (52) aufweist, wobei der Bund (52) des Rings (6) den Bund (53) des Pufferelementes (10) umfänglich übergreift.

11. Luftfeder nach einem der vorangehenden Ansprüche, **dadurch gekennzeichnet, dass** die dem Tauchkolben (5) zugewandte Ringunterseite (60) des Rings (6) den unteren Wulst (32) des Rollbalgs (3) radial überdeckt.

12. Luftfeder nach einem der Ansprüche 8,9 oder 10, **dadurch gekennzeichnet, dass** der Ring (6) den Tauchkolben (5), das Pufferelement (10) sowie den unteren Wulst des Rollbalgs (3) unlösbar sichert, vorzugsweise gegeneinander verspannt.

13. Luftfeder nach Anspruch 4, **dadurch gekennzeichnet, dass** der Tauchkolben (5) mit dem an seiner Oberseite gelegenen Vorsprung (35) samt Außengewinde (64) einschrittig durch Spritzguss gefertigt ist.

## Claims

1. Pneumatic spring for axles of vehicles with air suspension, with a plunger piston (5) which can be fixed to an axle, an upper closing cover (2) which can be fixed to the vehicle with a rolling lobe (3) attached thereto, and with a bead (32) which is formed on the rolling lobe (3) and which is fixed to the upper face (13) of the plunger piston (5) by a ring (6), **characterized in that** the ring (6) is secured against the plunger piston (5) via a rotational mechanism formed firstly on the ring (6) and secondly on the plunger piston (5).

2. Pneumatic spring according to Claim 1, **characterized in that** the rotational mechanism is a thread (34) between the ring (6) and the plunger piston (5).

3. Pneumatic spring according to Claim 2, **characterized in that** the thread (34) consists of an outer thread (64) and an inner thread (65), wherein the outer thread (64) is arranged on the plunger piston (5) and the inner thread (65) on the ring (6).

4. Pneumatic spring according to Claim 3, **characterized in that** the outer thread (64) is located on a round protrusion (35) molded onto the upper face (13) of the plunger piston (5).

5. Pneumatic spring according to Claim 1, **characterized in that** the side of the ring (6) facing away from the closing cover (2) and the side of the plunger piston (5) facing the closing cover (2) are toothed, whereby the toothing locks unilaterally.

6. Pneumatic spring according to any of Claims 1 to 5, **characterized in that** the side of the ring (6) facing away from the closing cover (2) consists of several upper catch elements (72) arranged radially symmetrically, and the side of the plunger piston (5) facing the closing cover (2) consists of several mutually adjacent lower catch elements (71), wherein the upper catch elements (72) have a chamfer (74) in the direction of the upper face (13) of the plunger piston (5), and the lower catch elements (71) have a chamfer (73) in the direction of the lower face (16) of the closing cover (2).

7. Pneumatic spring according to Claim 6, **characterized in that** the upper catch elements (72) are formed on the lower face (17) of a collar (52) of the ring (6) protruding towards the longitudinal axis (A) of the pneumatic spring (1), and the lower catch elements (71) are formed on the end face (18) of a round protrusion (35) of the plunger piston (5).

8. Pneumatic spring according to any of the preceding claims, **characterized in that** the ring (6) surrounds a buffer element (10) situated on the plunger piston (5) and facing the closing cover (2).

9. Pneumatic spring according to Claim 8, **characterized in that** the buffer element (10) is made of a rubber or a thermoplastic material.

10. Pneumatic spring according to Claims 8 and 9, **characterized in that** the buffer element (10) has a radial collar (53) oriented towards the casing surface (44) of the pneumatic spring (1), and the ring (6) has a radial collar (52) oriented towards the longitudinal axis (A) of the pneumatic spring (1), wherein the collar (52) of the ring (6) overlaps the collar (53) of the buffer element (10) circumferentially.

11. Pneumatic spring according to any of the preceding claims, **characterized in that** the underside (60) of the ring (6) facing the plunger piston (5) radially overlaps the lower bead (32) of the rolling lobe (3).

12. Pneumatic spring according to any of Claims 8, 9 and 10, **characterized in that** the ring (6) secures the plunger piston (5), the buffer element (10) and the lower bead of the rolling lobe (3) non-releasably, preferably clamping them together.

13. Pneumatic spring according to Claim 4, **characterized in that** the plunger piston (5), with the protrusion (35) located on its upper face and the outer thread (64), is produced in one step by injection molding.

## Revendications

1. Ressort pneumatique pour essieux de véhicules à suspension pneumatique, comprenant un piston plongeur (5) pouvant être fixé du côté de l'essieu, un couvercle de fermeture supérieur (2) pouvant être fixé du côté du véhicule avec un soufflet roulant (3) fixé à celui-ci, et comprenant un bourrelet (32) réalisé sur le soufflet roulant (3), qui est fixé sur le côté supérieur (13) du piston plongeur (5) par une bague (6), **caractérisé en ce que** la bague (6) est bloquée contre le piston plongeur (5) par un mécanisme de rotation réalisé d'une part sur la bague (6) et d'autre part sur le piston plongeur (5).

2. Ressort pneumatique selon la revendication 1, **caractérisé en ce que** le mécanisme de rotation est un filetage (34) entre la bague (6) et le piston plongeur (5) .

3. Ressort pneumatique selon la revendication 2, **caractérisé en ce que** le filetage (34) est constitué d'un filetage extérieur (64) et d'un filetage intérieur (65), le filetage extérieur (64) étant agencé sur le piston plongeur (5) et le filetage intérieur (65) sur la bague (6).

4. Ressort pneumatique selon la revendication 3, **caractérisé en ce que** le filetage extérieur (64) se trouve sur une saillie ronde (35) formée sur le piston plongeur (5) sur son côté supérieur (13).

5. Ressort pneumatique selon la revendication 1, **caractérisé en ce que** le côté de la bague (6) détourné du couvercle de fermeture (2) et le côté du piston plongeur (5) tourné vers le couvercle de fermeture (2) sont dentés, cette denture consistant en une denture à arrêt unilatéral.

6. Ressort pneumatique selon l'une quelconque des revendications 1 à 5, **caractérisé en ce que** le côté de la bague (6) détourné du couvercle de fermeture (2) est constitué de plusieurs éléments d'encliquetage supérieurs (72) agencés selon une symétrie radiale et le côté du piston plongeur (5) tourné vers le couvercle de fermeture (2) est constitué de plusieurs éléments d'encliquetage inférieurs (71) se raccordant les uns aux autres, les éléments d'encliquetage supérieurs (72) possédant un chanfrein (74) en direction du côté supérieur (13) du piston plongeur (5) et les éléments d'encliquetage inférieurs (71) possédant un chanfrein (73) en direction du côté inférieur (16) du couvercle de fermeture (2).

7. Ressort pneumatique selon la revendication 6, **caractérisé en ce que** les éléments d'encliquetage supérieurs (72) sont réalisés sur le côté inférieur (17) d'un collet (52) de la bague (6) faisant saillie par rapport à l'axe longitudinal (A) du ressort pneumatique (1), et les éléments d'encliquetage inférieurs (71) sont réalisés sur la surface frontale (18) d'une saillie ronde (35) du piston plongeur (5).

8. Ressort pneumatique selon l'une quelconque des revendications précédentes, **caractérisé en ce que** la bague (6) entoure un élément tampon (10) se trouvant sur le piston plongeur (5), tourné vers le couvercle de fermeture (2).

9. Ressort pneumatique selon la revendication 8, **caractérisé en ce que** l'élément tampon (10) est fabriqué en un caoutchouc ou en une matière plastique thermoplastique.

10. Ressort pneumatique selon les revendications 8 et 9, **caractérisé en ce que** l'élément tampon (10) présente un collet radial (53) orienté vers la surface d'enveloppe (44) du ressort pneumatique (1) et la bague (6) présente un collet radial (52) orienté vers l'axe longitudinal (A) du ressort pneumatique (1), le collet (52) de la bague (6) venant en prise sur le collet (53) de l'élément tampon (10) sur toute sa circonférence.

11. Ressort pneumatique selon l'une quelconque des revendications précédentes, **caractérisé en ce que** le côté inférieur de bague (60) de la bague (6) tourné vers le piston plongeur (5) recouvre radialement le bourrelet inférieur (32) du soufflet roulant (3).

12. Ressort pneumatique selon l'une quelconque des revendications 8, 9 ou 10, **caractérisé en ce que** la bague (6) bloque, de préférence serre les uns contre les autres, le piston plongeur (5), l'élément tampon (10) ainsi que le bourrelet inférieur du soufflet roulant (3) de manière indissociable.

13. Ressort pneumatique selon la revendication 4, **caractérisé en ce que** le piston plongeur (5) avec la saillie (35) située sur son côté supérieur, y compris le filetage extérieur (64), est fabriqué en une seule étape par moulage par injection.
